# FASCICULE DE BREVET EUROPEEN

(11) **EP 1 331 053 B1**
(45) Date de publication et mention de la délivrance du brevet: **11.05.2005**
(21) Numéro de dépôt: 02001855.2
(22) Date de dépôt: 28.01.2002
(51) Int. Cl.: B23B 13/12, B23B 31/10

(54) **Organe de guidage pour tour automatique**
Führungsglied für Drehautomat
Guiding member for automatic lathe

(43) Date de publication de la demande: 30.07.2003
(73) Titulaire: Crevoisier, René, CH-2714 Les Genevez (CH)
(72) Inventeur: Crevoisier, René, CH-2714 Les Genevez (CH)
(74) Mandataire: Gresset, Jean

(56) Documents cités:
- EP-A- 0 390 919
- WO-A-00/59660
- DE-C- 814 985
- GB-A- 2 181 373
- US-A- 4 631 995

## Description

La présente invention se rapporte aux tours automatiques tels que décrits dans le préambule de la revendication 1, du type bien connu sous le nom de décolleteuse. De tels tours permettent d'usiner successivement des pièces à partir d'une même barre de métal, de forme générale cylindrique. Ils comportent, à cet effet, une poupée, munie d'une pince dans laquelle la barre est serrée et entraînée en rotation et en translation, et des outils permettant d'usiner, par des opérations successives, la barre dans sa partie dépassant de la poupée. Dans ce tour, les outils, essentiellement des burins, se déplacent radialement en référence à l'axe de la barre.

La forme à usiner est obtenue, avec un outil donné, par la combinaison du mouvement radial de l'outil considéré et du mouvement de translation de la barre. Lorsque la pièce à usiner est longue, la pression exercée par l'outil à l'extrémité libre de la barre peut engendrer une flexion qui affecte la précision de l'usinage. C'est pourquoi le tour est muni d'un organe de guidage, disposé entre la pince et les outils.

Dans les tours actuellement utilisés, l'organe de guidage est formé d'un canon en matériau dur offrant de bonnes conditions de frottement, par exemple en carbure ou en céramique. Il est fixé rigidement sur la poupée, son axe devant être parfaitement aligné sur l'axe de la barre et son diamètre choisi de manière à ce que le jeu soit juste suffisant pour permettre une rotation libre de la barre.

Le choix du canon reste une des opérations les plus délicates dans le réglage du tour. Il suffit, en effet, d'un léger décalage de l'axe ou un diamètre de canon légèrement trop petit pour provoquer un grippage, malgré la lubrification. Il est, en outre, nécessaire de disposer d'un grand nombre de canons dont la forme et les dimensions seront choisies en fonction du diamètre de la barre, du matériau la constituant, de la longueur de la pièce à usiner, etc. Si le choix effectué n'est pas le bon, la précision des pièces peut en être sensiblement affectée.

Pour pallier cet inconvénient, le document DE 814 985 décrit un organe annulaire muni de trois trous radiaux dans lesquels les touches sont engagées. Ces dernières sont positionnées au moyen de vis.

La présente invention a pour but de proposer un organe de guidage simplifiant considérablement l'opération de réglage du tour, tout en offrant de bonnes conditions de guidage de la barre, même lorsqu'elle est de très petit diamètre. Elle se rapporte plus particulièrement à un organe de guidage pour tour automatique du type destiné à usiner une barre de forme générale cylindrique et comportant une poupée munie d'une pince de serrage dans laquelle la barre est fixée et des outils d'usinage. Cet organe est destiné à être intercalé entre la pince et les outils. Il comporte :
- un support destiné à être fixé sur la poupée et muni :
   - d'une ouverture le traversant de part en part, agencée pour assurer le passage de la barre,
   - au moins trois logements cylindriques disposés radialement en référence à l'ouverture et s'y ouvrant,
- des touches, disposées chacune dans l'un des logements, débouchant dans l'ouverture et munies, à leur extrémité engagée dans cette dernière, d'une surface de contact destinée à prendre appui contre la barre pour la guider, et
- des organes de maintien des touches en position de guidage.

Selon l'invention, l'organe de guidage comporte au moins cinq touches, dont quatre au moins sont formées d'une pièce semi-cylindrique, ces quatre touches étant adjacentes deux à deux et disposées dans les logements, en contact l'une avec l'autre par un plan passant par l'axe de la barre. Les surfaces de contact des touches adjacentes forment ensemble une surface concave d'angle au sommet inférieur à 180° et supérieur ou égal à 120°.

Pour que l'organe de guidage assure convenablement sa fonction, il est nécessaire que les surfaces de contact soient alignées avec la barre. Cela n'est possible que dans la mesure où les touches sont parfaitement positionnées angulairement. A cet effet, et dans un premier mode de réalisation, chacune d'elles est munie d'un biseau dans au moins une de ses parties de raccordement entre la surface plane et la surface semi-cylindrique, les biseaux des touches adjacentes définissant ensemble une rainure. Le support porte, en outre, des doigts de positionnement, engagés chacun dans l'un des logements dans lequel sont disposées les touches semi-cylindriques qui coopèrent avec la rainure pour orienter angulairement les touches en référence au support.

De bonnes conditions d'appui des touches sur la barre peuvent être obtenues en soumettant les touches semi-cylindriques à une force tendant à les amener en appui contre la barre. Cette force peut avantageusement être obtenue lorsque les organes de maintien comportent, associés à chaque touche semi-cylindrique,
- un piston monté coulissant sur le support et disposé dans le prolongement des touches,
- un ressort associé à chaque piston et coopérant avec le support pour engendrer une force tendant à faire pénétrer la touche dans l'ouverture dans laquelle se trouve la barre, et
- un organe de verrouillage disposé au voisinage des logements et tendant à bloquer la touche dans sa position de travail.

De manière avantageuse, chaque piston présente une surface plane disposée dans le prolongement de la surface plane de la touche avec lequel il coopère. Les touches semi-cylindriques adjacentes, d'une part, les pistons qui leurs sont associés, d'autre part, sont de longueurs différentes, la longueur totale d'une touche et de son piston étant sensiblement égale. Les pistons sont respectivement engagés dans des perçages disposés de part et d'autre de l'axe du logement. De la sorte, la surface plane du piston le plus long prend appui contre la surface plane de la touche la plus longue et la positionne ainsi angulairement.

De manière avantageuse, l'organe de verrouillage comporte une vis engagée sur le support et prenant appui contre au moins l'une des deux touches disposées dans chaque logement, les y bloquant ainsi.

Dans le but d'assurer un appui optimal durant les opérations d'usinage, les surfaces de contact des touches semi-cylindriques sont en appui contre la barre sensiblement dans une zone diamétralement opposée à celle dans laquelle un des outils entre en contact avec la barre pour l'usiner.

Afin d'éliminer pratiquement tout jeu lors de l'usinage, l'une des touches est cylindrique. L'organe de guidage comprend, en outre, un organe de réglage coopérant avec la touche cylindrique et agencé de manière à la déplacer vers la barre et à la positionner au contact de cette dernière. De manière avantageuse, cette touche cylindrique est munie, à son extrémité destinée à coopérer avec la barre, de deux faces planes définissant ensemble une surface concave d'angle au sommet voisin de 120°, ainsi que des moyens de guidage pour la positionner angulairement.

D'autres caractéristiques de l'invention ressortiront de la description qui va suivre, faite en regard du dessin annexé, dans lequel:
- la figure 1 montre, en perspective, un organe de guidage selon l'invention,
- la figure 2 est une vue agrandie de l'organe de la figure 1, dans laquelle les pièces formant support ont été supprimées,
- les figures 3 et 4 sont des vues d'une variante de l'organe de guidage de la figure 1, en coupe selon deux plans parallèles, perpendiculaires à l'axe de rotation de la barre à usiner; et
- la figure 5 représente, à une échelle agrandie, la barre et les touches assurant son guidage.

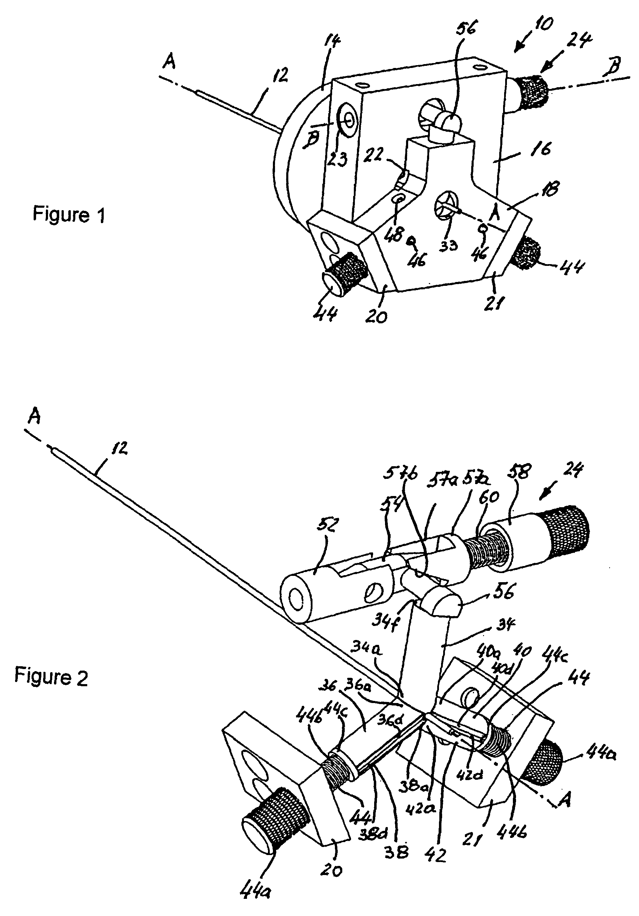

On notera que les organes de guidage représentés aux figures 1 et 2, d'une part, 3 et 4, d'autre part, diffèrent quant à la manière de positionner angulairement les touches.

L'organe de guidage représenté au dessin comporte un support 10 destiné à être fixé sur un tour automatique muni d'une poupée, agencé pour usiner une barre 12, de forme générale cylindrique, qui définit un axe longitudinal A-A.

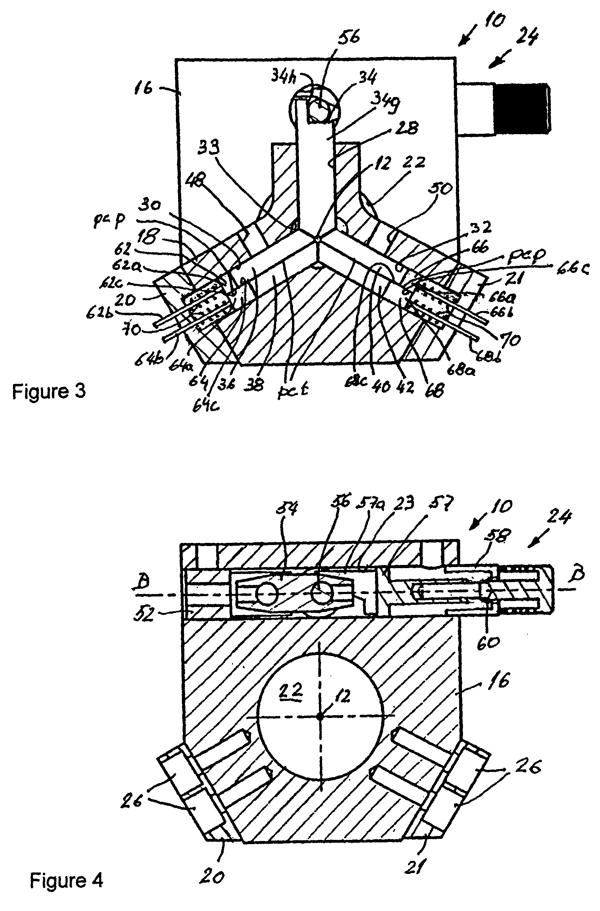

Le support 10 comporte un organe de fixation 14 (figure 1), de forme générale cylindrique et muni d'un taraudage permettant le vissage sur la poupée, un bloc de base 16, de forme générale parallélépipédique, un châssis de guidage 18 (figures 1 et 3) fixé sur le bloc de base 16 et deux plaquettes 20 et 21.

Le bloc de base 16 est muni d'une ouverture cylindrique 22 d'axe A-A, au travers de laquelle passe la barre 12 (figure 4). Il comporte un trou cylindrique 23 d'axe B-B inscrit dans un plan perpendiculaire à l'axe A-A dans lequel est logé un verrou 24 qui sera décrit de manière plus détaillée ci-après. Il comprend, en outre, quatre trous taraudés destinés à recevoir chacun une vis 26, lesquelles permettent, par paires, la fixation des plaquettes 20 et 21 (figure 4).

Comme on peut le voir sur la figure 3, le châssis 18 comporte trois logements 28, 30 et 32, formés chacun d'un trou cylindrique et disposés radialement en référence à l'axe A-A, et une ouverture cylindrique 33 le traversant de part en part, d'axe A-A, dans laquelle débouchent les logements 28, 30 et 32, et destinée à laisser passer la barre 12.

Les axes des logements définissent un plan perpendiculaire à l'axe A-A et forment entre eux des angles de 120°. Ces logements sont destinés à positionner axialement des touches de guidages, soit une touche de guidage 34 dans le logement 28 et deux touches de guidages 36 et 38, respectivement 40 et 42 dans les logements 30 et 32. Ces touches sont destinées à assurer le guidage de la barre 12 par leur extrémité identifiée par la lettre a, voisine de l'axe A-A. Elles sont réalisées en un matériau présentant un faible coefficient de frottement dans son contact avec la barre et supportant des températures élevées, par exemple du carbure de titane ou de tungstène.

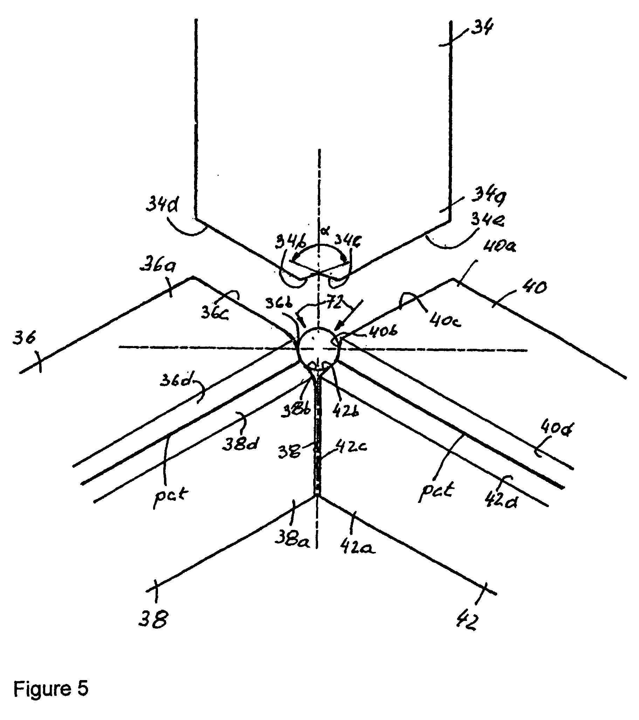

La touche 34 est de forme cylindrique. Elle comporte, à son extrémité 34a, deux surfaces planes ou légèrement convexes 34b et 34c (figure 5) se coupant sur une ligne passant par l'axe du cylindre et parallèle à l'axe A-A et formant sur leur ligne d'intersection un angle [α] de 120°. Ces surfaces sont ainsi agencées pour prendre appui contre la barre 12 en deux points distants de 60° environ.

L'extrémité 34a de la touche 34 est, en outre, munie de deux biseaux 34d et 34e dont la fonction sera précisée plus loin.

L'autre extrémité de la touche 34 comprend, dans la variante représentée sur les figures 1 et 2, un plan incliné 34f destiné à coopérer avec le verrou 24, comme cela sera expliqué plus loin. Dans le mode d'exécution de la figure 3, cette extrémité comporte deux surfaces orthogonales, l'une 34g perpendiculaire à l'axe de la touche 34, l'autre 34h parallèle à cet axe.

Les quatre autres touches 36, 38, 40 et 42 sont toutes de forme semi-cylindrique et accolées par paires dans leur logement respectif et disposées de manière à ce que leurs plans de contact pct se coupent sur l'axe A-A.

Leur extrémité a comporte une surface plane ou légèrement convexe identifiée par la lettre b et un biseau identifié par la lettre c, disposé de manière à ce que les paires de touches 36 et 38, respectivement 40 et 42 présentent ensemble une forme comparable à la touche 34. Grâce à la présence de ces biseaux, il est possible d'amener les touches plus près de l'axe A-A et ainsi de travailler avec des barres 12 de plus petit diamètre. Plus le biseau est important, plus le diamètre minimum peut être faible. On relèvera que, sur la figure 5, les surfaces de contact b et les biseaux c des touches 36 et 38 sont reliés par un arrondi. Il s'agit là d'une variante qui permet de travailler avec des barres dont les diamètres sont compris dans une plage sensiblement plus large qu'avec des surfaces de contacts planes.

Dans la variante illustrée aux figures 1 et 2, les plaquettes 20 et 21, fixées sur le bloc 16, s'étendent au-dessus du châssis 18 et servent de support à des vis 44, qui tiennent lieu d'organe de maintien des touches semi-cylindriques. Ces vis comportent chacune une molette identifiée par la lettre a, un filet b engagé dans un trou taraudé de la plaquette 20 ou 21, et un poussoir c destiné à prendre appui contre les extrémités b des touches avec lesquelles elles coopèrent, pour les appliquer contre la barre 12.

Les touches 36, 38, 40 et 42 sont munies, sur toute leur longueur, dans une des parties de raccordement entre la surface plane et la surface cylindrique, d'un biseau identifié par la lettre d. Les biseaux 36d et 38d, respectivement 40d et 42d, forment deux à deux des rainures de guidage.

Le châssis de guidage 18 porte deux doigts de positionnement 46, de forme générale cylindrique et orientés parallèlement à l'axe A-A. Ils pénètrent respectivement dans les logements 30 et 32, pour s'engager dans les rainures que forment les biseaux d, et ainsi positionner angulairement les touches dans leur logement.

Le châssis 18 comporte, en outre, deux trous taraudés 48 et 50, débouchant perpendiculairement respectivement dans les logements 30 et 32 et destinés à recevoir chacun une vis de blocage, non représentée, des paires de touches 36 et 38, respectivement 40 et 42.

Le verrou 24, plus particulièrement visible sur les figures 2 et 4, comporte un bouchon 52 fixé par une vis, non représentée, à l'une des extrémités du trou 23, une bascule 54 montée pivotante sur le bouchon 52 et munie d'un doigt de commande 56 solidaire de la bascule 54 et qui s'étend axialement selon une direction parallèle à l'axe A-A jusqu'à prendre appui contre l'extrémité 34f de la touche 34, et un poussoir formé d'un écrou 57 muni du côté du doigt de commande 56, d'une fourche 57a formant un plan incliné 57b, d'une bague 58 fixée dans l'autre extrémité du trou 23 et d'une vis 60 montée folle sur la bague 58 et engagée dans un trou taraudé de l'écrou 57.

Le verrou 24 permet d'exercer une pression sur la touche 34, tout en l'orientant. Plus précisément, le plan incliné 57b repousse le doigt 56 en direction de la touche 34 qui prend appui sur le plan incliné 34f de la touche 34, déplaçant cette dernière en direction de la barre 12. Si le plan incliné 34f n'est pas aligné avec la surface d'appui du doigt 56, la touche 34 tourne alors dans son logement 28 jusqu'à ce que les surfaces 34b et 34c soient orientées parallèlement à l'axe A-A.

Ainsi, dans cette variante, il est possible de régler la position de l'extrémité des touches 36, 38, 40 et 42 au moyen des vis 44, puis de garantir des conditions de pivotement optimales de la barre 12 dans l'organe de guidage en appliquant la touche 34 avec une pression adéquate contre la barre, au moyen du verrou 24.

Dans la variante représentée aux figures 3 et 4, le doigt 56 prend appui contre la surface 34g pour déplacer la touche 34 en direction de la barre, et contre la surface 34h, ce qui peut faire pivoter la touche 34 dans son logement, jusqu'à assurer l'alignement des surfaces de contact 34b et 34c sur la barre 12.

Cette variante diffère aussi de celle décrite en référence aux figures 1 et 2, quant aux organes de maintien. Ici, les touches 36 et 40 sont plus longues que les touches 38 et 42. Les organes de maintien sont également fixés au châssis 18 au moyen des plaquettes 20 et 21. Ils comprennent quatre pistons 62, 64, 66 et 68, et quatre ressorts à boudin 70 intercalés entre les pistons et les plaquettes 20 ou 21.

Les pistons 62 et 66 coopèrent respectivement avec les touches 36 et 40, qui sont les plus longues, alors que les pistons 64 et 68 coopèrent avec les touches courtes 38 et 42. La longueur totale de chaque touche et du piston avec laquelle elle coopère est sensiblement la même. De la sorte, les ressorts 70 sont armés de la même manière et appliquent une force égale sur chacune des touches.

Chaque piston comporte une tête semi-cylindrique identifiée par la lettre a et une tige identifiée par la lettre b, chaque tête étant munie d'une surface plane identifiée par la lettre c. Les pistons 62 et 64, respectivement 66 et 68, forment des paires accolées l'une à l'autre par un plan de contact pcp, défini par les surfaces planes c des pistons voisins, et qui se trouve dans le prolongement du plan de contact pct des touches. Ils sont chacun montés dans l'une des plaquettes 20 ou 21, par engagement de la tige b dans un trou orienté selon un axe parallèle à celui du logement fermé par la plaquette considérée. Les surfaces planes 64c et 68c s'étendent respectivement sur une portion des surfaces planes des touches longues 36 et 40 et les orientent ainsi angulairement.

Avec une telle configuration, la touche la plus courte permet un engagement du piston le plus long de manière que la surface plane du piston le plus long coopère avec la surface plane de la touche la plus longue et positionne ainsi cette dernière. Lorsque la barre 12 est en place, les touches 36 et 38, respectivement 40 et 42, peuvent être fixées au moyen d'une vis engagée dans le trou taraudé 48 ou 50.

Ainsi, les touches semi-cylindriques sont parfaitement positionnées, tant axialement qu'angulairement. Une telle solution est particulièrement bien adaptée lorsque la barre est suffisamment rigide pour ne pas se déformer sous l'effet des ressorts 70. Dans cette variante comme dans l'autre, la touche 34 est finalement appliquée contre la barre pour garantir ainsi sa rotation sans jeu dans l'organe de guidage.

Dans les deux variantes décrites, la forme des touches est la même, avec des surfaces de contact réparties de manière sensiblement égale sur la périphérie de la barre. Selon les outils utilisés, schématiquement représentés sur la figure 5 par les flèches 72, et les conditions d'usinage de la barre 12, il peut être souhaitable de modifier les positions de contact des touches semi-cylindriques sur la barre 12, de manière à ce que les conditions d'appui soient optimales, par exemple que l'outil vienne appuyer perpendiculairement aux surfaces de contact.

## Revendications

1. Organe de guidage, pour tour automatique du type destiné à usiner une barre (12) de forme générale cylindrique et comportant une poupée munie d'une pince de serrage dans laquelle la barre est fixée et des outils, ledit organe destiné à être intercalé entre la pince et les outils, comporte :
• un support (10) destiné à être fixé sur la poupée et muni :
- d'une ouverture (22, 33) le traversant de part en part et agencée pour assurer le passage de ladite barre,
- d'au moins trois logements (28, 30, 32) cylindriques disposés radialement en référence à ladite ouverture et s'y ouvrant,
• des touches (34, 36, 38, 40, 42) disposées dans lesdits logements (28, 30, 32) débouchant dans l'ouverture (23, 33) et munies d'une surface de contact (34b, 34c, 36b, 38b, 40b, 42b) à leur extrémité (34a, 36a, 38a, 40a, 42a) engagée dans ladite ouverture et destinée à prendre appui contre la barre (12) pour la guider, et
• des organes de maintien des touches en position de guidage,
**caractérisé en ce qu'**il comporte au moins cinq touches (34, 36, 38, 40, 42) dont quatre au moins (36, 38, 40, 42) sont formées d'une pièce semi-cylindrique; ces quatre touches étant adjacentes deux à deux et disposées dans lesdits logements, en contact l'une avec l'autre par un plan (pct) passant par l'axe (A-A) de la barre (12), les surfaces de contact (36a, 38a; 40a, 42a) des touches adjacentes (36, 38 ; 40, 42) formant un angle inférieur à 180° et supérieur ou égal à 120°.

2. Organe de guidage selon la revendication 1, **caractérisé en ce que** chaque touche semi-cylindrique (36, 38, 40, 42) est munie d'un biseau (36d, 38d, 40d, 42d) dans au moins une de ses parties de raccordement entre la surface plane et la surface semi-cylindrique, les biseaux des touches adjacentes (36d, 38d; 40d, 42d) définissant ensemble une rainure, et **en ce que** ledit support porte, en outre, des doigts de positionnement (46), engagés chacun dans l'un des logements (30, 32) dans lequel les touches semi-cylindriques (36, 38, 40, 42) sont logées, qui coopèrent avec ladite rainure pour orienter les touches en référence à la barre (12).

3. Organe de guidage selon la revendication 1, **caractérisé en ce que** les organes de maintien comportent, associés à chaque touche semi-cylindrique (36, 38, 40, 42), un piston (62, 64, 66, 68) monté coulissant sur le support (10) et disposé dans le prolongement des touches (36, 38, 40, 42), et un ressort (70) associé à chaque piston et coopérant avec le support (10) pour engendrer une force tendant à faire pénétrer la touche (36, 38, 40, 42) dans ladite ouverture (33), et un organe de verrouillage disposé au voisinage des logements et tendant à bloquer la touche (36, 38, 40, 42) dans sa position de travail.

4. Organe de guidage selon la revendication 3, **caractérisé en ce que** les touches semi-cylindriques adjacentes, d'une part (36, 38 ; 40, 42), les pistons, d'autre part (62, 64 ; 66, 68) sont de longueurs différentes, la longueur totale d'une touche et de son piston étant sensiblement égale, et **en ce que** lesdits pistons sont respectivement engagés dans des trous pratiqués dans le support (10) et disposés de part et d'autre de l'axe du logement.

5. Organe de guidage selon l'une des revendications 1 à 4, **caractérisé en ce que** l'organe de verrouillage comporte une vis engagée dans un trou (48, 50) du support (18) et prenant appui contre au moins l'une (36, 40) des deux touches disposées dans chaque logement, les y bloquant ainsi.

6. Organe de guidage selon l'une des revendications 1 à 5, **caractérisé en ce que** lesdites touches semi-cylindriques (36, 38, 40, 42) sont en appui contre la barre (12) sensiblement dans une zone diamétralement opposée à celle dans laquelle un des outils (72) entre en contact avec ladite barre (12).

7. Organe de guidage selon l'une des revendications 1 à 6, **caractérisé en ce que** l'une desdites touches (34) est cylindrique et **en ce qu'**il comprend, en outre, un organe de réglage (24) agencé de manière à assurer un déplacement de la touche cylindrique (34) vers la barre (12) et à la positionner au voisinage de cette dernière.

8. Organe de guidage selon la revendication 7, **caractérisé en ce que** ladite touche cylindrique (34) est munie, à son extrémité (34a) destinée à coopérer avec ladite barre, de deux faces (34b, 34c) définissant ensemble une surface concave d'angle au sommet (?) voisin de 120°.

## Patentansprüche

1. Führungsglied für eine automatische Drehmaschine der Bauart, welche dazu bestimmt ist, eine insgesamt zylindrisch ausgebildete Stange (12) zu bearbeiten, mit einem Spindelkasten, welcher mit einer Spannzange versehen ist, in welcher die Stange befestigt ist, und mit Werkzeugen, wobei das genannte Glied, welches dazu bestimmt ist, zwischen der Zange und den Werkzeugen angeordnet zu werden, Folgendes aufweist:
• einen Träger (10), welcher dazu bestimmt ist, an dem Spindelkasten befestigt zu werden, und mit
- einer Öffnung (22, 33), die ihn vollkommen durchquert und angeordnet ist, um den Durchgang der Stange sicherzustellen,
- mindestens drei zylindrischen Aufnahmen (28, 30, 32), welche in Bezug auf die genannte Öffnung radial angeordnet sind, und mit Öffnung hier hinein ausgebildet sind,
versehen ist,
• Tasten (34, 36, 38, 40, 42), welche in den, in der Öffnung (23, 33) mündenden Aufnahmen (28, 30, 32) angeordnet und mit einer Kontaktfläche (34b, 34c, 36b, 38b, 40b, 42b) an deren Ende (34a, 36a, 38a, 40a, 42a) versehen sind, welches in die Öffnung greift und dazu bestimmt ist, sich gegen die Stange (12) abzustützen, um sie zu führen, und
• Glieder, um die Tasten in Führungsstellung zu halten,
**dadurch gekennzeichnet, dass** es mindestens fünf Tasten (34, 36, 38, 40, 42) aufweist, von denen mindestens vier (36, 38, 40, 42) durch ein halbzylindrisches Teil gebildet werden, wobei diese vier Tasten paarweise aneinander anliegen und derart in den Aufnahmen angeordnet sind, dass sie miteinander über eine die Achse (A-A) der Stange (12) durchquerende Ebene (pct) in Kontakt sind, wobei die Kontaktflächen (36a, 38a; 40a, 42a) der aneinander anliegenden Tasten (36, 38; 40, 42) einen Winkel bilden, welcher kleiner als 180° und größer als oder gleich 120° ist.

2. Führungsglied nach Anspruch 1, **dadurch gekennzeichnet, dass** jede halbzylindrische Taste (36, 38, 40, 42) mit einer Abschrägung (36d, 38d, 40d, 42d) in mindestens einem ihrer Anschlussbereiche zwischen der ebenen Fläche und der halbzylindrischen Fläche versehen ist, wobei die Abschrägungen der aneinander anliegenden Tasten (36d, 38d; 40d, 42d) zusammen eine Nut definieren, und dass der Träger ferner Positionierungsfinger (46) trägt, welche jeweils in eine der Aufnahmen (30, 32) greifen, in welcher die halbzylindrischen Tasten (36, 38, 40, 42) eingesetzt sind, welche mit der Nut zusammenwirken, um die Tasten in Bezug auf die Stange (12) auszurichten.

3. Führungsglied nach Anspruch 1, **dadurch gekennzeichnet, dass** die Halteglieder folgende, jeder halbzylindrischen Taste (36, 38, 40, 42) zugeordnete Elemente aufweisen: einen Kolben (62, 64, 66, 68), welcher gleitend auf dem Träger (10) montiert ist und in der Verlängerung der Tasten (36, 38, 40, 42) angeordnet ist, und eine Feder (70), welche jedem Kolben zugeordnet ist und mit dem Träger (10) zusammenwirkt, um eine Kraft zu erzeugen, welche dahin strebt, die Taste (36, 38, 40, 42) in die Öffnung (33) eindringen zu lassen, und ein Verriegelungsglied, welches in der Nähe der Aufnahmen angeordnet ist und dahin strebt, die Taste (36, 38, 40, 42) in ihrer Arbeitsstellung zu blockieren.

4. Führungsglied nach Anspruch 3, **dadurch gekennzeichnet, dass** die halbzylindrischen aneinander liegenden Tasten (36, 38; 40, 42) einerseits und die Kolben (62, 64; 66, 68) andererseits unterschiedliche Längen aufweisen, wobei die Gesamtlänge einer Taste und ihres Kolbens weitestgehend gleich ist, und dass die Kolben jeweils in Löcher greifen, welche in dem Träger (10) gebildet und beidseitig der Achse der Aufnahme angeordnet sind.

5. Führungsglied nach einem der Ansprüche 1 bis 4, **dadurch gekennzeichnet, dass** das Verriegelungsglied eine Schraube aufweist, welche in ein Loch (48, 50) des Trägers (18) greift und sich gegen mindestens eine (36, 40) der zwei, in jeder Aufnahme angeordneten Tasten abstützt, wodurch sie diese darin blockiert.

6. Führungsglied nach einem der Ansprüche 1 bis 5, **dadurch gekennzeichnet, dass** die halbzylindrischen Tasten (36, 38, 40, 42) sich gegen die Stange (12) im Wesentlichen in einem Bereich abstützen, welcher diametral entgegengesetzt liegt zu demjenigen, in dem eines der Werkzeuge (72) mit der Stange (12) in Kontakt tritt.

7. Führungsglied nach einem der Ansprüche 1 bis 6, **dadurch gekennzeichnet, dass** eine der Tasten (34) zylindrisch ist und dass es ferner ein Einstellglied (24) aufweist, welches derart angeordnet ist, dass eine Verschiebung der zylindrischen Taste (34) zur Stange (12) hin sichergestellt ist und diese in die Nähe dieser Letzteren positioniert wird.

8. Führungsglied nach Anspruch 7, **dadurch gekennzeichnet, dass** die zylindrische Taste (34) an ihrem Ende (34a), welche dazu bestimmt ist, mit der Stange zusammenzuwirken, mit zwei Flächen (34b, 34c) versehen ist, welche zusammen eine konkave Oberfläche mit einem Spitzenwinkel (α) nahe bei 120° bilden.

## Claims

1. Guide member for an automatic lathe of the type for machining a bar (12) of generally cylindrical shape and including a headstock provided with a chuck in which the bar is secured and tools, said member being intended to be inserted between the chuck and the tools, comprising:
• a support (10) to be secured to the headstock and provided with:
- an aperture (22, 33) running right therethrough and arranged for the passage of said bar,
- at least three cylindrical housings (28, 30, 32) disposed radially in relation to said aperture and opening into the latter,
• keys (34, 36, 38, 40, 42) disposed in said housings (28, 30, 32) opening into the aperture (23, 33) and provided with a contact surface (34b, 34c, 36b, 38b, 40b, 42b) at their end (34a, 36a, 38a, 40a, 42a) engaged in said aperture and intended to abut against the bar (12) to guide it, and
• members for holding the keys in the guide position,
**characterized in that** it further includes at least five keys (34, 36, 38, 40) at least four (36, 38, 40, 42) of which are formed of a semi-cylindrical part; said four keys being in adjacent pairs and disposed in said housings, in contact with each other via a plane (pct) passing through the axis (A-A) of the bar (12), the contact surfaces (36a, 38a; 40a, 42a) of the adjacent keys (36, 38; 40, 42) forming an angle of less than 180° and greater than or equal to 120°.

2. Guide member according to claim 1, **characterized in that** each semi-cylindrical key (36, 38, 40, 42) is provided with a bevel (36d, 38d, 40d, 42d) in at least one of its connecting parts between the plane surface and the semi-cylindrical surface, the bevels of the adjacent keys (36d, 38d; 40d, 42d) together defining a groove, and **in that** said support further carries positioning fingers (46) each engaged in one of the housings (30, 32) in which the semi-cylindrical keys (36, 38, 40, 42) are housed, which cooperate with said groove to orient the keys with reference to the bar (12).

3. Guide member according to claim 1, **characterized in that** the holding members include, associated with each semi-cylindrical key (36, 38, 40, 42), a piston (62, 64, 66, 68) mounted so as to slide on the support (10) and disposed in the extension of the keys (36, 38, 40, 42), and a spring (70) associated with each piston and cooperating with the support (10) to generate a force tending to make the key (36, 38, 40, 42) penetrate said aperture (33), and a locking member disposed in proximity to the housings and tending to lock the key (36, 38, 40, 42) in its working position.

4. Guide member according to claim 3, **characterized in that** the adjacent semi-cylindrical keys, on the one hand (36, 38; 40, 42), the pistons (62, 64; 66, 68) on the other hand, are of different lengths, the total length of one key and its piston being substantially equal, and **in that** said pistons are respectively engaged in holes made in the support (10) and disposed on either side of the axis of the housing.

5. Guide member according to any of claims 1 to 4, **characterized in that** the locking member includes a screw engaged in a hole (48, 50) of the support (18) and abutting against at least one (36, 40) of the two keys disposed in each housing, thus locking said keys therein.

6. Guide member according to any of claims 1 to 5, **characterized in that** said semi-cylindrical keys (36, 38, 40, 42) abut against the bar (12) substantially in a zone diametrically opposite that in which one of the tools (72) enters into contact with said bar (12).

7. Guide member according to any of claims 1 to 6, **characterized in that** one of said keys (34) is cylindrical and **in that** it further includes an adjusting member (24) arranged for moving the cylindrical key (34) towards the bar (12) and positioning the key in proximity to the latter.

8. Guide member according to claim 7, **characterized in that** said cylindrical key (34) is provided, at the end (34a) thereof intended to cooperate with said bar, with two faces (34b, 34c) together defining a concave surface with an apex angle (?) close to 120°.
